# EUROPEAN PATENT APPLICATION

(11) **EP 2 908 080 A1**
(43) Date of publication of application: **19.08.2015**
(21) Application number: 14397505.0
(22) Date of filing: 13.02.2014
(51) Int. Cl.: F28F 3/04, F24F 12/00, F28D 9/00

(54) **Heat exchanger structure for reducing accumulation of liquid and freezing**

(71) Applicant: Ekocoil Oy, 14200 Turenki (FI)
(72) Inventor: Mäyrä, Veikko, 14200 Turenki (FI)
(74) Representative: Tampereen Patenttitoimisto Oy

(57) **Abstract**

The invention relates to a method for reducing accumulation of liquid and freezing in a plate type countercurrent heat exchanger (100) comprising a stack of heat transfer plates (102). There is also provided a plate type countercurrent heat exchanger (100) comprising a stack of heat transfer plates (102) forming a primary flow channels for a first flow (116) of heat exchange gas and a secondary flow channels for a second flow (118) of heat exchange gas. The stack of heat transfer plates comprise a channelling section (138) in which the primary flow channels and the secondary flow channels are located. The channelling section (138) of the heat transfer plates (102) comprises formations which form ridges and grooves the direction of which is at an angle with respect to the direction of flows (116, 118) of the heat exchange gases in the primary flow channels and the secondary flow channels. In some embodiments the direction of ridges and grooves is perpendicular to the direction of flows. In some embodiments the distance between two adjacent plates in the stack is substantially constant at the channelling section (138). The structure of the heat exchanger plates according to the present invention reduces the risk of liquid building up inside the heat exchanger and hence reduces the risk of forming ice on the surfaces of the heat exchanger plates. Therefore, flowing of gases (e.g. air) inside the heat exchanger is also improved.

## Description

### Field of the Invention

The present invention relates to a plate type countercurrent (counterflow) heat exchanger adapted for reducing accumulation of liquid, for example water, and freezing. The heat exchanger comprises a stack of heat transfer plates forming a primary flow channels for a first flow of heat exchange gas and a secondary flow channels for a second flow of heat exchange gas; a first interface portion for receiving the first flow of heat exchange gas and for outputting the second flow of heat exchange gas; and a second interface portion for outputting the first flow of heat exchange gas and for receiving the second flow of heat exchange gas. The present invention also relates to a method for reducing accumulation of liquid and freezing in a plate type countercurrent heat exchanger comprising a stack of heat transfer plates for transferring thermal energy from a first flow of heat exchange gas to a second flow of heat exchange gas, the method comprising inputting the first flow of heat exchange gas to the primary flow channels; inputting the second flow of heat exchange gas to the secondary flow channels; outputting the first flow of heat exchange gas from the primary flow channels; and outputting the second flow of heat exchange gas from the secondary flow channels.

### Background of the Invention

Plate type countercurrent heat exchangers are known in which stack of plates have been formed in such a way that parallel flow channels are formed between two adjacent plates. A primary heat exchanging substance flows in every parallel flow channel and a secondary heat exchanging substance flows in every parallel but in an opposite direction. The plates of such heat exchangers are typically such that they have projections and depressions, wherein the plates are stacked over each other so that the top of projections of one plate coincide depressions of an adjacent plate wherein longitudinal channels are formed between the plates. This means that the flow in the channels may not be uniform in the cross-sectional area of the channels but the flow may be stronger in the middle of the channels than near the edges of the channels. Thus, heat exchange may not be as efficient than it could be if the heat exchange flows were more uniformly distributed over the whole cross section of the channels.

### Summary of the Invention

An aim of the present invention is to improve the efficiency of plate type countercurrent heat exchangers. In some embodiments there is provided a plate type countercurrent heat exchanger in which the exchanger plates are formed in such a way that channels having substantially constant height are formed and which are not planar in the flow direction. In other words, the cross section of the channels in the longitudinal direction resemble a pattern which have protrusions or slopes or alike upwards and downwards (i.e. rises and descents). In some embodiments the slopes are formed symmetrically through the channels and may be like e.g. sine waves, sawtooth patterns, triangles, etc. The slopes form kind of ridges and grooves.

According to a first aspect there is provided a plate type countercurrent heat exchanger comprising:
a stack of heat transfer plates forming a primary flow channels for a first flow of heat exchange gas and a secondary flow channels for a second flow of heat exchange gas, wherein the stack of heat transfer plates comprise a channelling section in which the primary flow channels and the secondary flow channels are located;
characterised in that the channelling section of the heat transfer plates comprises formations which form ridges and grooves the direction of which is at an angle with respect to the direction of flows of the heat exchange gases in the primary flow channels and the secondary flow channels.

According to a second aspect there is provided a method for reducing accumulation of liquid and freezing in a plate type countercurrent heat exchanger comprising a stack of heat transfer plates for transferring thermal energy from a first flow of heat exchange gas to a second flow of heat exchange gas, the a stack of heat transfer plates forming a primary flow channels for a first flow and a secondary flow channels for a second flow of heat exchange gas, the method comprising:
inputting the first flow of heat exchange gas to the primary flow channels;
inputting the second flow of heat exchange gas to the secondary flow channels;
outputting the first flow of heat exchange gas from the primary flow channels; and
outputting the second flow of heat exchange gas from the secondary flow channels;
characterised in that the method further comprises:
   providing the first flow of heat exchange gas and the second flow of heat exchange gas to flow channels formed by plates comprising ridges and grooves, wherein in the method liquid is removed from the heat exchanger via the channels between the plates in a direction different from the direction of the flows.

According to a third aspect there is provided a use of the plate type countercurrent heat exchanger for reducing accumulation of liquid and freezing in the plate type countercurrent heat exchanger.

Dependent claims define some example embodiments.

The structure of the heat exchanger plates according to the present invention reduces the risk of liquid building up inside the heat exchanger and hence reduces the risk of forming ice on the surfaces of the heat exchanger plates. Therefore, flowing of gases (e.g. air) inside the heat exchanger is also improved.

### Description of the Drawings

In the following the present invention will be described in more detail with reference to the appended drawings in which
- Figure 1a: depicts a heat exchanger according to an example embodiment;
- Figure 1b: depicts a stack of plates of the heat exchanger of Figure 1 a;
- Figures 2a-2e: depict examples of cross sections of a plate of the heat exchanger according to the present invention;
- Figure 3: depicts a cross section of a heat exchanger according to an example embodiment;
- Figure 4a: depicts as a top view an example of a stack of plates of the heat exchanger according to an example embodiment;
- Figure 4b: depicts as a side view an example of a stack of plates of Figure 4a;
- Figure 4c: depicts as a perspective view an example of a stack of plates of Figure 4a; and
- Figure 5: depicts an example of a ventilation system in which the present invention may be used.

### Detailed Description of the Invention

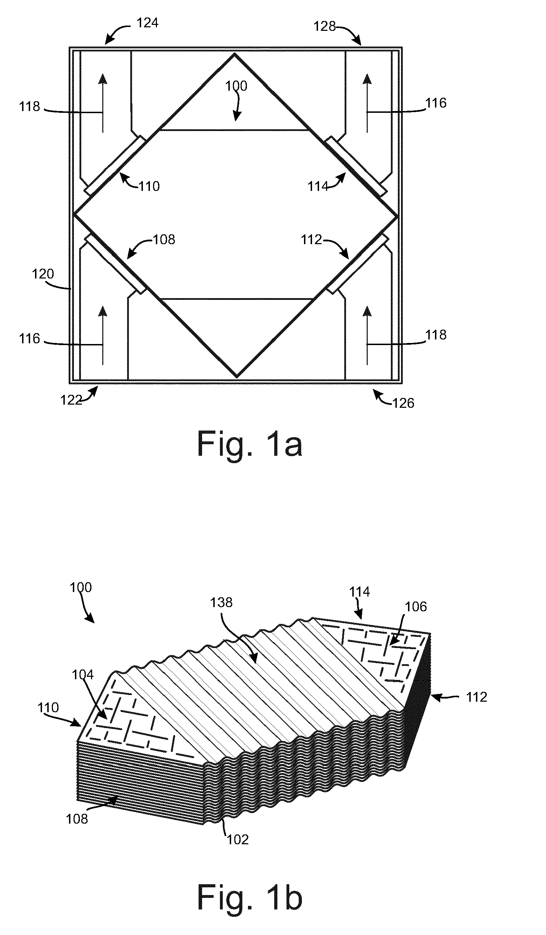

Figure 1 a depicts an example in which a heat exchanger 100 according to an example embodiment installed into a housing 120 and Figure 1b depicts a stack of plates 102 of the heat exchanger 100 of Figure 1a. The heat exchanger 100 is the so called plate type countercurrent heat exchanger in which the primary heat exchange substance (a first heat exchange gas) and the secondary heat exchange substance (a second heat exchange gas) are arranged to flow in opposite directions. The heat exchanger 100 comprises a stack of plates 102 which have been designed so that appropriate channels are formed between the plates in the stack. The heat exchanger 100 also comprises a first interface portion 104 and a second interface portion 106. The first interface portion 104 comprises a first input 108 for receiving the first flow 116 of heat exchange gas and a first output 110 for outputting the second flow 118 of heat exchange gas. The second interface portion 106 comprises a second input 112 for receiving the second flow 118 of heat exchange gas and a second output 114 for outputting the first flow 116 of heat exchange gas.

The heat exchanger 100 may also comprise the housing 120 in which the stack of plates 102 may be installed. The housing 120 has a first inlet 122 which connects an external piping with the first input 108 so that the first flow 116 can flow from the external piping to the heat exchanger 100. The housing 120 also has a first outlet 124 which connects the external piping with the first output 110 so that the first flow 116 can flow from the heat exchanger 100 to the external piping. Respectively, the housing 120 has a second inlet 126 and a second outlet 128 to connect the external piping with the second input 112 and with the second output 114, respectively. Hence, the second flow 118 of heat exchange gas may be input 108 to the heat exchanger and heated secondary heat exchange gas may be output from the heat exchanger 100.

In the heat exchanger 100 according to some example embodiments of the present invention the plates are formed in such a manner that appropriate channels for the first heat exchange gas and the second heat exchange gas are formed when the plates are stacked over one another. The cross section of the plates in longitudinal direction i.e. in the direction of the flows of the heat exchange substances alters in such a way that the height of the channel is substantially constant but is not planar. In other words, the plates have a curved form which may be e.g. a sine (cosine) wave, a triangle (a queue of triangles), a sawtooth, parabolic (a queue of parabolas), or another appropriate form which has rising and falling slopes. These rising and falling slopes form a kind of ridges (peaks) and grooves the direction of which is substantially perpendicular to the direction of flow of the heat exchange gases or may somewhat deviate from the perpendicular direction. For example, the direction of the formations may form an angle with the direction of the flow of the heat exchange gases which is within the range of ±45° from the perpendicular direction. In an embodiment the range is within ±20°. The range of the angle may also be ±30°. In yet another embodiment the angle is about 5°. It should be noted here that the form of the alterations need not remain the same through the length of the channels but the forms may change. For example, the "wavelength" of sine wave may be shorter near the beginning and end of the channels and longer in between. Furthermore, the steepness of the rising slopes need not be the same as the falling slopes i.e. the forms may be asymmetrical.

In practical implementations it may be difficult to position each adjacent plate so that the formations are accurately at the same location than in the adjacent plate. Thus, some tolerances may occur. For example, the location of the peaks may deviate about 20 % of the distance between two adjacent ridges /grooves of the same plate in the direction of the first flow 116.

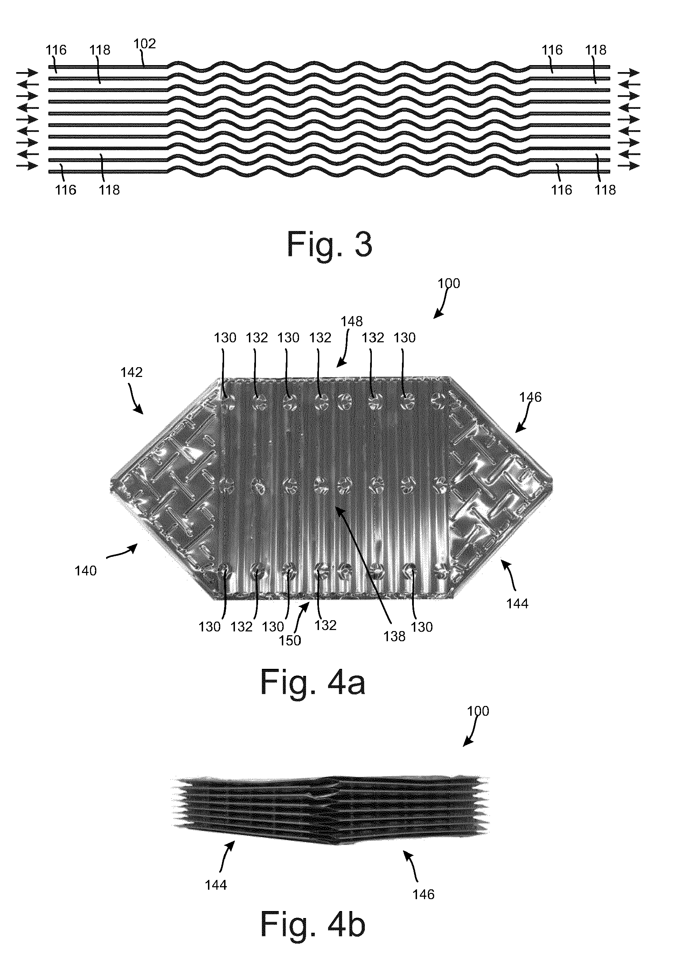

The plates may have areas in which the channel form is not maintained but there may be other formations which might be needed to keep adjacent plates separate. For example, the plates may comprise notches 130 and protrusions 132 as is illustrated in Figure 4a.

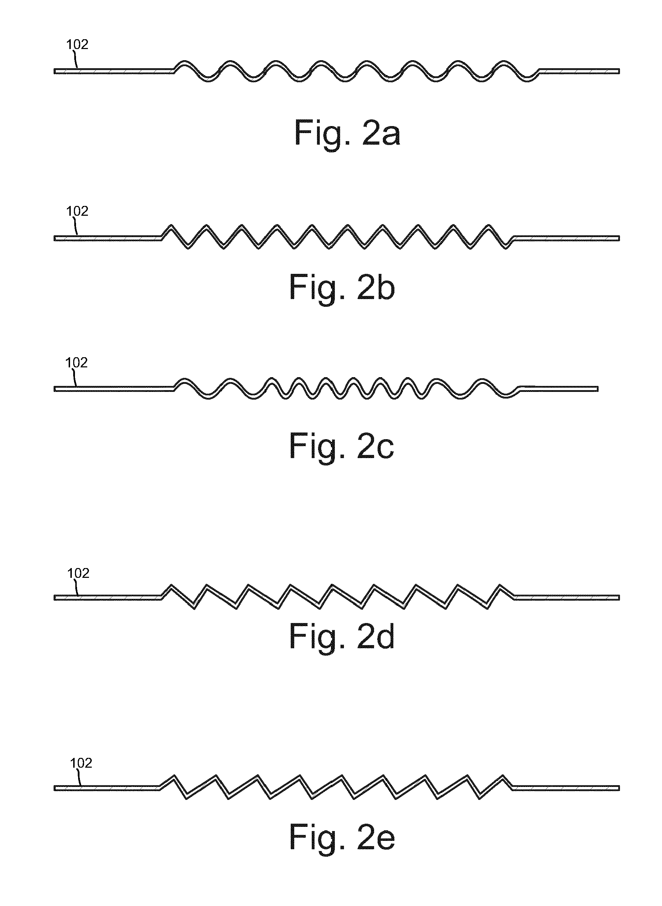

Figures 2a-2e depict some examples of possible cross sections of the plates of the heat exchanger 100 according to the present invention. In the example of Figure 2a the plates are formed to form sinusoidal channels when the plates are stacked over each other. In the example of Figure 2b the plates are formed to form channels having rounded triangles when the plates are stacked over each other. Figure 2c illustrates a sinewave pattern in which the wavelength is not constant, Figure 2d illustrates an example of a sawtooth pattern, and Figure 2e illustrates another sawtooth pattern.

Figure 3 illustrates an example of a cross section of a stack of plates 102 formed according to the present invention. The number of plates 102 in the stack may vary depending e.g. on the heat exchange efficiency which the heat exchanger 100 should have. Also the distance between two adjacent plates, i.e. the channel height, may be different in different embodiments. From Figure 3 it can be seen that parallel channels are formed between plates 102 so that the height of the channels is substantially constant throughout the length of the channels. The first interface portion 104 and the second interface portion 106 in Figure 1b are arranged in such a way that the first flow 116 of heat exchange gas flows in every other channel and the second flow 118 of heat exchange gas flows in the channels which are in between of the first heat exchange gas flows. Thus, in most of the channels the second flow 118 of heat exchange gas has two heat transferring surfaces with the first heat exchange gas flow. It is naturally obvious that the topmost and lowermost channels may only have one surface but every other channel should have two such surfaces.

The substantially constant channel height causes less resistance to the heat exchange gas flows compared to the channel structures of such heat exchangers in which the channel height is not constant in the direction of the heat exchange gas flows. The new and inventive channel structure also has the advantage that the possibly condensed liquid or other substance can be more easily removed from the heat exchanger compared to heat exchangers in which the channel height is not constant and in which the channels may have spots in which two parallel plates are against each other. Furthermore, due to the reduced risk of accumulation of liquid the heat exchanger is less vulnerable to freezing. This shortens defreezing and draining period and also reduces accumulation of dirt and lengthens maintenance periods.

In some embodiments the channel structure may also be such that the height of the channels is not constant but may be different in different parts of the channels. For example, some or all the channels may have one or more locations in which the channel height is lower than in other locations, or vice versa i.e. one or more locations may have higher channel height than the other parts of the channels.

In the following it is described how the stack of plates 102 may be formed. The plates may be formed of a sheet-like material, such as metals like aluminium, copper or steel. The plates may also be formed from polymers or cellulosic or synthetic fibre materials. The plates should be fabricated to the form by which the channel structure can be achieved. This may be performed by pressing or thermoforming the sheets in a mould, for example. Another way is to use moulding or casting wherein melt or viscous material is transferred or injected into a mould where the material solidifies and remains in the desired form. The solidified plates may then be removed from the mould.

The thickness of the plates may be different in different embodiments. Also the ratio between the channel height and the thickness of the plates may be different in different embodiments. In some example embodiments the plate thickness may be e.g. 0.1, 0.2, 0.4, 0.5, 0.6, 0.8 or 1.0 mm but the invention is not limited to such thicknesses only. For example, the thickness is within the range of 0.05 mm and 5 mm. The ratio between the channel height and the thickness of the plates may be 100:1 or less. In some embodiments the channel height is within the range of 0.1 mm and 50 mm. In some locations the adjacent plates may be in contact with each other.

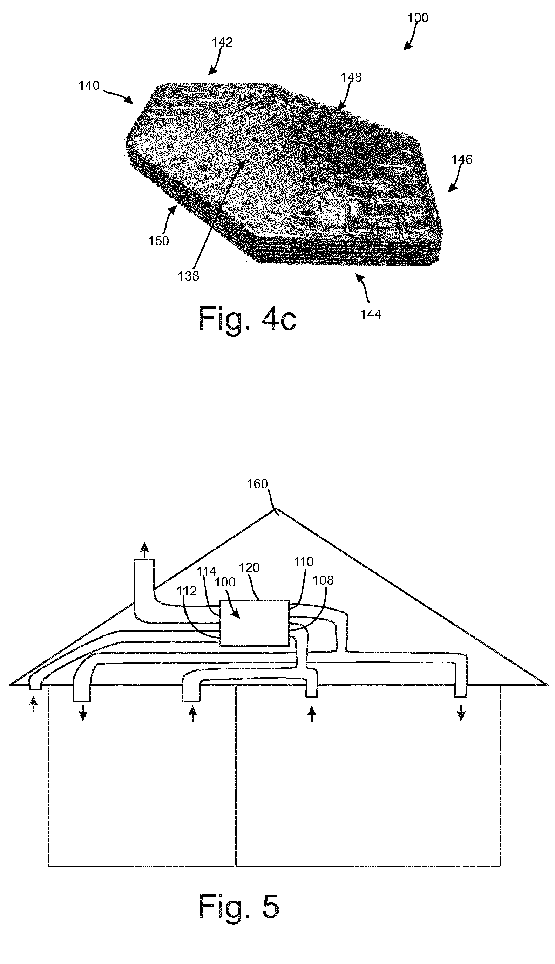

The plates in the stack are joined together at certain locations which will be described next with reference to Figures 1b, 4a and 4c. In this example it is assumed that the plates have the centre section 138, in which the channels will be formed, and the interface portions 104, 106. The centre section may also be called as a channelling section. It may also be assumed that the plates comprises a first edge 140 and a second edge 142 at the first interface portion 104, and a third edge 144 and a fourth edge 146 at the second interface portion 106, as is shown in Figures 1b and 4a. Without losing generality, the plates in the stack may be consecutively numbered from 1 to N, in which N is a positive integer greater than 3. In many embodiments N may be greater than 100 but may also be less than 100. The first interface portion 104 comprises the first input 108 and the first output 110. The first input 108 may be formed so that the first edge of the first plate 1 is attached with the first edge of the second plate 2, the first edge of the third plate 3 is attached with the first edge of the fourth plate 4, the first edge of the fifth plate 5 is attached with the first edge of the sixth plate 2, etc. Correspondingly, the first output 110 may be formed so that the second edge of the second plate 2 is attached with the second edge of the third plate 3, the second edge of the fourth plate 4 is attached with the second edge of the fifth plate 5, the second edge of the sixth plate 6 is attached with the second edge of the seventh plate 7, etc. The attachment is performed in such a way that it is substantially gas tight i.e. that no gas can flow between the edges which are attached together. If the plates are made from metal, the edge of one plate may be bent over the edge of the other plate. It may also be possible to use adhesive, welding or other means in the attachment. Hence, heat exchange gas can flow between the first plate 1 and the second plate 2, between the third plate 3 and the fourth plate 4, between the fifth plate 5 and the sixth plate 6 etc. into the heat exchanger 100, and respectively, heat exchange gas can flow between the second plate 2 and the third plate 3, between the fourth plate 4 and the fifth plate 5, between the sixth plate 6 and the seventh plate 7 etc. from the heat exchanger 100.

The second interface portion 106 may be formed in the similar way, but keeping in mind that in the second output 114 edges of the same plates as in the first input are attached with each other. This means that the fourth edge of the first plate 1 is attached with the fourth edge of the second plate 2, the fourth edge of the third plate 3 is attached with the fourth edge of the fourth plate 4, the fourth edge of the fifth plate 5 is attached with the fourth edge of the sixth plate 2, etc. Correspondingly, in the second input 112 edges of the same plates are attached with each other than in the first output. This means that the third edge of the second plate 2 is attached with the third edge of the third plate 3, the third edge of the fourth plate 4 is attached with the third edge of the fifth plate 5, the third edge of the sixth plate 6 is attached with the third edge of the seventh plate 7, etc.

Sides 148, 150 of the stack of plates 102 may be sealed gastight by appropriate means to reduce heat exchange gases leaking out from the channels.

Figure 4b shows the interface section in which edges of adjacent plates have been attached with each other as described above.

Figure 5 depicts an example of a ventilation system in which the present invention may be used. The system may be implemented in buildings 160 to provide change of air in the building. Fresh air can flow outside of the building to an air inlet which is connected to a piping system which leads the fresh air to the first input 108 of the heat exchanger 100. Fresh air flows in the heat exchanger from the first input 108 to the second output 114 and further to the piping system. The piping system comprises ventilation which allow fresh air flowing into the rooms of the building. Similarly, the building has ventilation in the rooms to draw used air from the rooms into the piping system. The piping system leads used air into the second input 112. From the second input 112 used air flows in the heat exchanger 100 to the first output 110. The first output 110 is connected to a piping which leads used air outside of the building. When used air is warmer than fresh air the used air warms fresh air in the heat exchanger thus energy may be recovered from the used air before it is let outside of the building. The channel structure according to the present invention may improve the energy recovery compared to prior art heat exchangers.

In some embodiments the stack of plates 102 of the heat exchanger 100 is separate from the first interface portion 104 and the second interface portion 106, wherein the stack of plates 102 mainly comprises the channelling section. Therefore, one end of the stack of plates 102 should be connected to appropriate elements which guide the first heat exchange gas flow 116 into the first input 108 and the second flow 118 to the first output 110, and the opposite end of the stack of plates 102 should be connected to appropriate elements which guide the second heat exchange gas flow into the second input 112 and the first flow 116 to the second output 114.

The position of the stack of plates 102 in the heat exchanger 100 may be selected so that the formations of the plates 102 (i.e. ridges and grooves of the plates) are not in a horizontal direction. This means that in situations in which some substance (e.g. water) condenses on the surface of the plates in the channels, it can flow downwards on the surface of the plates 102. Hence, condensed substance does not significantly affect the flow of the heat exchange gases. Condensing may be problem especially humid and cold climates wherein the heat exchanger 100 of the present invention may also operate better in such environments.

In some embodiments all the plates 102 in the stack of plates may be substantially identical, wherein both the height of the primary flow channels and the height of the secondary flow channels is substantially the same. In some other embodiments there may be two different sets of plates stacked so that every other plate is selected from one set and every other plate is selected from the other set. This may enable to produce a stack of plates in which the height of the primary flow channels is different from the height of the secondary flow channels. However, also in this latter option the height of the channels is substantially constant.

## Claims

1. A plate type countercurrent heat exchanger (100) comprising:
a stack of heat transfer plates (102) forming a primary flow channels for a first flow (116) of heat exchange gas and a secondary flow channels for a second flow (118) of heat exchange gas, wherein the stack of heat transfer plates comprise a channelling section (138) in which the primary flow channels and the secondary flow channels are located;
**characterised in that** the channelling section (138) of the heat transfer plates (102) comprises formations which form ridges and grooves the direction of which is at an angle with respect to the direction of flows (116, 118) of the heat exchange gases in the primary flow channels and the secondary flow channels.

2. The heat exchanger (100) according to claim 1, **characterised in that** the distance between two adjacent plates in the stack is substantially constant at the channelling section (138).

3. The heat exchanger (100) according to claim 1 or 2 further comprising:
a first interface portion (104) for receiving the first flow (116) of heat exchange gas and for outputting the second flow (118) of heat exchange gas; and
a second interface portion (106) for outputting the first flow (116) of heat exchange gas and for receiving the second flow (118) of heat exchange gas;

4. The heat exchanger (100) according to claim 1, 2 or 3, wherein displacement of the ridges of adjacent heat transfer plates in the stack is within 20 % of the distance between two adjacent ridges of the same plate in the direction of the first flow (116).

5. The heat exchanger (100) according to claim 1, 2 or 3, wherein the height of the primary flow channels is different from the height of the secondary flow channels.

6. The heat exchanger (100) according to any of the claims 1 to 5, wherein the height of the primary flow channels and the height of the secondary flow channels is at most one hundred times a thickness of the plates (102).

7. The heat exchanger (100) according to any of the claims 1 to 6, wherein the thickness of the plates (102) is within the range of 0.05 mm and 5 mm.

8. The heat exchanger (100) according to any of the claims 1 to 7, wherein the height of the primary flow channels and the height of the secondary flow channels is within the range of 0.1 mm and 50 mm.

9. The heat exchanger (100) according to any of the claims 1 to 8, wherein the angle is within ±45° from a perpendicular direction of the flows.

10. The heat exchanger (100) according to any of the claims 1 to 9, wherein the form of the channels in the direction of the flows (116, 118) is one of the following:
sine wave;
a queue of triangles;
sawtooth;
a queue of parabolas.

11. A method for reducing accumulation of liquid and freezing in a plate type countercurrent heat exchanger (100) comprising a stack of heat transfer plates (102) for transferring thermal energy from a first flow (116) of heat exchange gas to a second flow (118) of heat exchange gas, the a stack of heat transfer plates (102) forming a primary flow channels for a first flow (116) and a secondary flow channels for a second flow (118) of heat exchange gas, the method comprising:
inputting the first flow of heat exchange gas to the primary flow channels;
inputting the second flow of heat exchange gas to the secondary flow channels;
outputting the first flow of heat exchange gas from the primary flow channels; and
outputting the second flow of heat exchange gas from the secondary flow channels;
**characterised in that** the method further comprises:
providing the first flow (116) of heat exchange gas and the second flow (118) of heat exchange gas to flow channels formed by plates (102) comprising ridges and grooves, wherein in the method liquid is removed from the heat exchanger via the channels between the plates in a direction different from the direction of the flows.

12. A use of the plate type countercurrent heat exchanger (100) according to any of the claims 1 to 10 for reducing accumulation of liquid and freezing in the plate type countercurrent heat exchanger (100).
